# EUROPÄISCHE PATENTSCHRIFT

(11) **EP 2 576 277 B1**
(45) Veröffentlichungstag und Bekanntmachung des Hinweises auf die Patenterteilung: **15.04.2015**
(21) Anmeldenummer: 11721289.4
(22) Anmeldetag: 16.05.2011
(51) Int. Cl.: B60L 9/00, B60L 11/00, B60L 11/18

(54) **ELEKTRISCHE SCHALTUNG FÜR EINEN ENERGIESPEICHER EINES FAHRZEUGES, LADESTATION UND VERFAHREN ZUM AUFLADEN EINES ENERGIESPEICHERS**
ELECTRIC CIRCUIT FOR AN ENERGY STORE OF A VEHICLE, CHARGING STATION AND METHOD FOR CHARGING AN ENERGY STORE
CIRCUIT ÉLECTRIQUE POUR UN ACCUMULATEUR D'ÉNERGIE D'UN VÉHICULE, STATION DE CHARGEMENT ET PROCÉDÉ DE CHARGEMENT D'UN ACCUMULATEUR D'ÉNERGIE

(30) Priorität: 28.05.2010 DE 102010029450
(43) Veröffentlichungstag der Anmeldung: 10.04.2013
(73) Patentinhaber: Siemens Aktiengesellschaft, 80333 München (DE)
(72) Erfinder: MEINERT, Michael, 91056 Erlangen (DE); ECKERT, Peter, 91058 Erlangen (DE); RASTOGI, Armin, 91469 Hagenbüchach (DE); RECHENBERG, Karsten, 91077 Dormitz (DE)
(86) Internationale Anmeldenummer: PCT/EP2011/057882
(87) Internationale Veröffentlichungsnummer: WO 2011/147708

(56) Entgegenhaltungen:
- US-A1- 2002 093 310
- US-B2- 6 864 598

## Beschreibung

Die Erfindung betrifft eine elektrische Schaltung, die zum Aufladen eines Energiespeichers eines Fahrzeuges vorgesehen ist. Weiterhin betrifft die Erfindung eine Ladestation, ein Fahrzeug und ein Verfahren zum Aufladen eines Energiespeichers eines Fahrzeuges.

Aus DE 198 31 204 A1 sind ein Verfahren und eine Vorrichtung zum Betrieb eines elektromotorisch angetriebenen Fahrzeuges bekannt. Zum Betrieb von elektromotorisch angetriebenen, aus einem Fahrstromnetz gespeisten Fahrzeugen wird zumindest ein Teil der von den elektromotorisch angetriebenen Fahrzeugen beim Anfahren oder Beschleunigen benötigten Energie in kinetische Energie speichernde Energiespeicher gespeichert, die mit einem einen Streckenabschnitt des Fahrstromnetzes speisenden Unterwerken und/oder den Fahrzeugen selbst verbunden sind. Damit wird zum einen die Aufnahme von Rückspeiseenergie von bremsenden Fahrzeugen möglich, die ihre Bremsenergie an das Fahrstromnetz abgeben, und zum anderen erfolgt eine Vergleichmäßigung der Stromaufnahme aus der Sicht des Versorgungsnetzes und damit ein Abbau von Belastungsspitzen.

Weiterhin ist es aus US 2002/0174798 bekannt, ein elektrisch betriebenes Fahrzeug, insbesondere ein Schienenfahrzeug, das einen Energiespeicher aufweist, mit Hilfe einer externen Energiequelle aufzuladen.

Aus US 6,864,598 ist ein System zur elektrischen Versorgung eines elektrisch angetriebenen Fahrzeugs bekannt, das von einer Bordstromversorgung oder einer äußeren Stromversorgung mit elektrischer Energie versorgt wird. Um die Bildung von Lichtbögen am Stromabnehmer zu vermeiden, wird die Spannung der Bordstromversorgung so geregelt, dass der Strom in der Oberleitung bei Verbindungsaufbau und Verbindungstrennung jeweils fast Null ist. Dazu wird der Stromfluss in der Versorgungsleitung gemessen und die Spannung oder die Stromstärke in der Weise geregelt, dass kein Stromfluss auftritt.

Die Aufgabe der Erfindung besteht darin, eine verbesserte Schaltung für ein Fahrzeug oder eine Ladestation und ein verbessertes Verfahren zum elektrischen Aufladen eines Energiespeichers eines Fahrzeuges bereitzustellen.

Die Aufgabe der Erfindung wird durch die Schaltung gemäß Patentanspruch 1 und durch das Verfahren gemäß Patentanspruch 9 gelöst.

Ein Vorteil der erfindungsgemäßen Schaltung besteht darin, dass das Verbinden und/oder das Trennen der elektrischen Kontakte zum Aufladen des Energiespeichers verbessert wird. Dies wird dadurch erreicht, dass die Ströme und Spannungen in der Weise gesteuert werden, dass die Ausbildung eines Lichtbogens zwischen den Kontakten reduziert oder vermieden wird. Dies wird beispielsweise dadurch erreicht, dass der Stromfluss in der Weise gesteuert wird, dass hohe Ströme beim Aufbauen oder Trennen der elektrischen Verbindung zwischen Fahrzeug und Ladestation vermieden werden.

Zudem werden beispielsweise die Spannungen auf der Seite des Energiespeichers und auf der Seite der Ladestation vor dem Verbinden und/oder Trennen der elektrischen Kontakte so angepasst werden, dass der Stromfluss gering ist und die Ausbildung eines Lichtbogens begrenzt wird.

Gemäß dem erfindungsgemäßen Verfahren wird der Stromfluss so gesteuert oder es werden die Spannungsunterschiede zwischen der Ladestation und dem Energiespeicher vor dem Verbinden und/oder Trennen der elektrischen Kontakte in der Weise angepasst, dass ein Stromfluss zwischen der Ladestation und dem Energiespeicher reduziert wird. Auf diese Weise wird einer Ausbildung eines Lichtbogens beim Verbinden und/oder Trennen der elektrischen Kontakte entgegen gewirkt.

Erfindungsgemäß ist ein Strombegrenzungsmittel vorgesehen, das einen Stromrückfluss vom Energiespeicher zu der Ladestation wenigstens reduziert oder völlig unterbindet. Damit kann z.B. die Spannung auf der Seite des Energiespeichers vor dem Trennen der elektrischen Kontakte höher eingestellt werden als die Spannung auf der Seite der Ladestation. Somit wird eine einfache Begrenzung des Stroms an den Kontaktstellen und damit vorzugsweise eine lichtbogenfreie Trennung der Kontakte ermöglicht.

Das Strombegrenzungsmittel ist in Form einer Diode ausgebildet, die einen Stromfluss von dem Energiespeicher in Richtung Ladestation verhindert.

Weitere vorteilhafte Ausführungsformen der Erfindung sind in den abhängigen Ansprüchen angegeben.

In einer weiteren Ausführungsform ist ein Erkennungsmittel vorgesehen, das einen bevorstehenden Aufbau oder eine bevorstehende Trennung der elektrischen Verbindung zwischen der Energiequelle und dem Energiespeicher erkennt und ein entsprechendes Erkennungssignal an die elektrische Schaltung weiterleitet. Durch das Vorsehen des Erkennungsmittels ist eine präzise zeitliche Steuerung des Stroms möglich. Somit kann z. B. der Ladestrom zum Aufladen des Energiespeichers bis kurz vor dem Trennen der elektrischen Kontakte der Energiequelle und des Energiespeichers beibehalten werden. Damit kann insbesondere ein Fahrzeug noch während eines Anfahrens weiterhin mit Energie von der Ladestation versorgt werden. Erst kurz vor dem tatsächlichen Trennen der elektrischen Verbindung zwischen der Energiequelle und dem Energiespeicher wird der Ladestrom reduziert und z.B. zu Null geregelt.

In einer vorteilhaften Ausführungsform ist als Erkennungsmittel ein Positionserkennungsmittel vorgesehen, das die relative Position des Fahrzeuges in Bezug auf die Energieversorgungseinheit erfasst und somit präzise eine Trennung der elektrischen Verbindung, d.h. der elektrischen Kontakte zwischen dem Fahrzeug und der Energieversorgungseinheit detektieren kann.

Als Positionserkennungsmittel können beispielsweise GPS-Systeme, RFID-Elemente, eine Fahrstreckenmessung oder Balisen eingesetzt werden. Zudem können Sensoren verwendet werden, die mit Hilfe elektrischer Signale, magnetischer Signale oder Lichtsignale die Position des Fahrzeuges erfassen und einen bevorstehenden Aufbau oder eine bevorstehende Trennung der elektrischen Kontakte zwischen Fahrzeug und Energieversorgungseinheit detektieren.

In einer weiteren Ausführungsform weist die elektrische Schaltung, die die elektrische Spannung auf der Seite der Energiequelle und/oder auf der Seite des Energiespeichers beeinflusst, einen Hoch-/Tiefsetzsteller auf, der zur Einstellung der Spannung bzw. des Stromes verwendet wird. Die Verwendung des Hoch-/Tiefsetzstellers stellt ein einfaches und zuverlässiges Mittel zur Einstellung des Energieflusses dar.

In einer weiteren Ausführungsform ist die elektrische Schaltung in der Weise ausgebildet, dass der Strom zwischen Ladestation und Fahrzeug erst nach dem Anfahren des Fahrzeuges begrenzt bzw. zu Null geregelt wird. Dadurch ist es möglich, noch während des Anfahrvorganges des Fahrzeuges, bei dem viel Energie verbraucht wird, die Energieversorgung durch die Energiequelle zu nutzen und den Energiespeicher zu schonen.

Die Erfindung wird im Folgenden anhand der Figuren näher erläutert. Es zeigen:
- FIG 1: eine Anordnung mit einem Fahrzeug und einer Ladestation;
- FIG 2: ein Diagramm über die Spannungsverläufe auf der Seite der Ladestation und auf der Seite des Energiespeichers;
- FIG 3: ein Diagramm über einen Stromverlauf zwischen der Ladestation und dem Fahrzeug;
- FIG 4: eine weitere Ausführungsform einer Ladestation mit einem Fahrzeug.

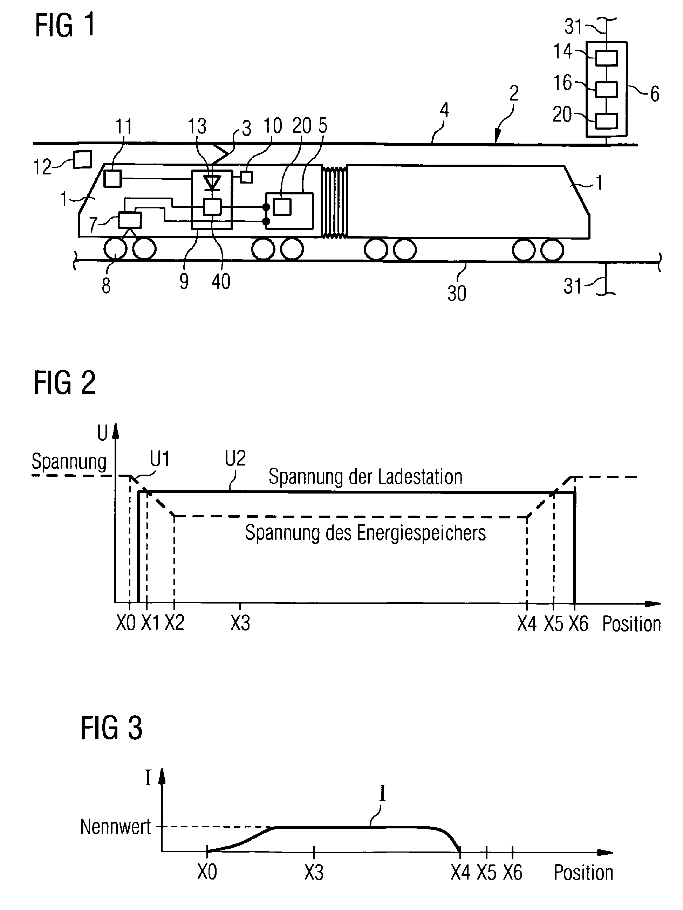

FIG 1 zeigt in einer schematischen Darstellung ein Fahrzeug 1, das beispielsweise als Auto, als Schienenfahrzeug oder als Bus ausgebildet sein kann. Das Fahrzeug 1 weist einen elektrischen Antrieb 7 auf, der zum Antreiben des Fahrzeuges 1, insbesondere zum Antreiben von Rädern 8 des Fahrzeuges 1 ausgebildet ist. Weiterhin weist das Fahrzeug 1 einen Energiespeicher 5 auf, der beispielsweise als Batterie oder als Kondensator, beispielsweise als Doppelschichtkondensator oder als Kombination mit einer Batterie und mindestens einem Kondensator aufgebaut ist. Der Energiespeicher 5 versorgt wenigstens zeitweise die Verbraucher, wie beispielsweise den elektrischen Antrieb 7, mit elektrischer Energie. Zusätzlich zum Energiespeicher 5 können auch andere Energieerzeugungsmittel am Fahrzeug 1 vorgesehen sein, die den Antrieb 7 mit elektrischer Energie versorgen. Beispielsweise kann der Antrieb 7 auch direkt mit Energie aus einer externen Ladestation 2 versorgt werden.

Zur Versorgung des elektrischen Antriebs 7 ist eine elektrische Schaltung 9 vorgesehen, die zudem mit dem Energiespeicher 5 in Verbindung steht und die elektrische Aufladung des Energiespeichers 5 über zwei elektrische Kontakte steuert. Die elektrische Schaltung 9 weist einen Schalter 40 auf, über den der Energiespeicher 5 und/oder der Antrieb 7 mit Energie aus der Ladestation 2 versorgt werden kann. Der erste elektrische Kontakt 3 ist beispielsweise als Kontakt zwischen einer Oberleitung 4 und einem Stromabnehmer zur elektrischen Kontaktierung einer Energiequelle 6 der Ladestation 2 ausgebildet. In dem dargestellten Ausführungsbeispiel ist der zweite elektrische Kontakt der Ladestation 2 zwischen einem Rad 8 und einer Schiene 30 ausgebildet. Die Energiequelle 6 stellt beispielsweise eine Gleichspannung von 750 V bereit. Die Energiequelle 6 steht sowohl mit der Oberleitung 4 als auch mit der Schiene 30 in Verbindung, auf der die Räder 8 fahren. Dabei ist beispielsweise ein positiver Spannungsanschluss der Energiequelle 6 mit der Oberleitung 4 und ein negativer Spannungsanschluss über eine Zuleitung 31 mit der Schiene 30 verbunden. Der Energiespeicher 5 ist mit einer weiteren Zuleitung entweder direkt oder über die elektrische Schaltung 9 mit dem negativen Spannungsanschluss der Ladestation 2 verbunden.

Abhängig von der gewählten Ausführungsform kann am Fahrzeug ein Positionserkennungsmittel 10 vorgesehen sein, das die örtliche Position des Fahrzeuges 1 erfasst. Das Positionserkennungsmittel 10 kann z. B. in Form eines GPS-Sensors ausgebildet sein. Das Positionserkennungsmittel 10 ist mit der elektrischen Schaltung 9 über eine Signalleitung verbunden. Ein weiteres Positionserkennungsmittel kann beispielsweise in Form eines Positionssensors 11 ausgebildet sein, der mit Hilfe eines im Bereich der Ladestation ortsfest angeordneten Sensors 12 die relative Position des Fahrzeuges 1 zum ortsfesten Sensor 12 erfasst. Damit kann z. B. festgestellt werden, wann das Fahrzeug 1 in die Ladestation 2 einfährt und damit ein elektrischer Kontakt zwischen dem Fahrzeug 1 und der Energiequelle 6 hergestellt wird. Zum Herstellen des elektrischen Kontaktes kontaktiert der erste elektrische Kontakt 3 des Stromabnehmers des Fahrzeuges die Oberleitung 4 und das Rad 8 die Schiene 30. Zudem kann mit Hilfe der Positionserkennungsmittel festgestellt werden, wann ein Fahrzeug 1 z.B. nach dem Anfahren eine Ladestation 2 verlässt und damit ein Trennen der elektrischen Verbindung zwischen dem ersten Kontakt 3 und der Oberleitung 4 erfolgt.

Weiterhin weist die elektrische Schaltung 9 abhängig von der gewählten Ausführungsform ein Strombegrenzungsmittel 13 auf, das den Stromfluss vom Energiespeicher 5 über die Kontakte 3,4 in Richtung der Energiequelle 6 begrenzt, insbesondere unterbindet. Eine bevorzugte Ausführungsform für das Strombegrenzungsmittel 13 ist das Vorsehen einer elektrischen Diode, die einen Stromfluss vom Energiespeicher 5 in Richtung Energiequelle 6 über die Kontakte 3,4 verhindert. Abhängig von der gewählten Ausführungsform kann die elektrische Schaltung 9 auch eine andere Art von Stromregler aufweisen. In einer weiteren Ausführungsform kann der Energiespeicher 5 einen Hoch/Tiefsetzsteller als Stromregler 20 aufweisen. Der Stromregler ist in der Weise ausgebildet, um den Stromfluss von der Energiequelle 6 zum Energiespeicher 5 oder von der Energiequelle 6 zum Antrieb 7 insbesondere beim Herstellen des elektrischen Kontaktes zwischen dem Fahrzeug 1 und der Ladestation 2 zu steuern. Insbesondere kann der Stromregler dafür sorgen, dass vom Energiespeicher 5 kein Strom zurück zur Ladestation fließt.

Ein Aspekt der Erfindung besteht darin, beim Herstellen oder Trennen einer elektrischen Verbindung zwischen der Energiequelle 6 und dem Energiespeicher 5 oder dem Antrieb 7 hohe Ströme in der Anfangsphase zu vermeiden. Dies wird beispielsweise dadurch erreicht, dass die Spannungen des Energiespeichers und der Energiequelle, die vor dem Herstellen oder vor dem Trennen einer elektrischen Verbindung zwischen dem Energiespeicher und der Energiequelle anliegen, so beeinflusst werden, insbesondere angenähert werden, dass dadurch die anfangs fließenden Ströme reduziert werden. Eine Annäherung der Spannung der Energiequelle und des Energiespeichers kann beispielsweise dadurch erreicht werden, dass vor dem Herstellen des elektrischen Kontaktes entweder die Spannung der Energiequelle oder die Spannung des Energiespeichers geändert wird.

Die Spannungsdifferenz zwischen Energiequelle und Fahrzeug fällt über die Diode, bzw. über dem Strombegrenzungselement 13 ab. Die Diode bzw. das Strombegrenzungselement 13 verhindert also einen Stromfluss von dem Energiespeicher 5 in Richtung Energiequelle 6. Die höhere Spannung auf der Seite des Energiespeichers 5 führt somit aufgrund des Strombegrenzungsmittels 13 zu keinem wesentlichen Stromfluss beim Herstellen oder Trennen einer elektrischen Verbindung zwischen dem ersten Kontakt 3 und der Oberleitung 4 und vereinfacht das Verfahren, weil die Spannungen der Energiequelle und des Energiespeichers nicht genau aneinander angepasst werden müssen.

In einer weiteren Ausführungsform wird anstelle der Spannungen der Stromfluss zwischen dem Energiespeicher 5 und der Energiequelle 6 durch die elektrische Schaltung 9, insbesondere den Stromregler, in der Weise eingestellt, dass vor dem Trennen einer elektrischen Verbindung zwischen dem Energiespeicher 5 und der Energiequelle 6 der Stromfluss so beeinflusst wird, dass beim Trennen der elektrischen Verbindung keine oder nur ein geringer Strom fließt.

Der ortsfeste Sensor 12 und der Positionssensor 11 können beispielsweise RFID-Elemente oder Balisen zur Erkennung der Ortsposition verwenden. Zudem können elektrische, magnetische oder Lichtsignale verwendet werden, um die Ortsposition des Fahrzeuges zu erfassen. Weiterhin kann eine Streckenzählung durchgeführt werden, um die Ortsposition zu erfassen.

Abhängig von der gewählten Ausführungsform kann eine weitere elektrische Schaltung 14 in der Ladestation 2 zwischen der Energiequelle 6 und dem Energiespeicher 5 des Fahrzeuges vorgesehen sein. Die elektrische Schaltung 14 kann einen weiteren Stromregler in Form eines Hoch-/Tiefsetzstellers 20 und/oder ein weiteres Strombegrenzungsmittel aufweisen. Der weitere Stromregler 20 oder das weitere Strombegrenzungsmittel sind zwischen der Oberleitung und der Energiequelle 6 in der Weise angeordnet, dass ein Stromfluss vom Energiespeicher 5 in Richtung der Energiequelle 6 zumindest reduziert oder vollständig vermieden wird. Sollte das weitere Strombegrenzungsmittel vorgesehen sein, kann auch auf den Stromregler oder das Strombegrenzungsmittel 13 im Fahrzeug 1 verzichtet werden.

In einer weiteren Ausführungsform kann ein Schalter 16 vorgehen sein, der abhängig von der Position des Fahrzeuges oder zeitgesteuert die Energiequelle 6 ein- und ausschalten. Die Position des Fahrzeugs 1 wird von dem ortsfesten Sensor 12 erfasst und an die weitere elektrische Schaltung 14 und den Schalter 16 weitergeleitet.

Durch die Senkung des Stroms beim Trennen oder Herstellen einer elektrischen Verbindung zwischen Energiequelle und Energiespeicher wird der Verschleiß an den elektrischen Kontakten reduziert, die kontaktiert bzw. getrennt werden. Dadurch werden die Betriebskosten gesenkt und die Verfügbarkeit im Betrieb, sowie die Sicherheit wird erhöht.

FIG 2 zeigt ein Diagramm, in dem die Spannung U1 des Energiespeichers 5 und die Spannung U2 der Energiequelle 6 über die Ortsposition des Fahrzeuges 1 aufgetragen sind. Das Fahrzeug bewegt sich von links nach rechts. Beim Anfahren an die Ladestation 2 ist die Spannung des Energiespeichers höher als die Spannung der Energiequelle 6 der Ladestation 2. Beim Einfahren in die Ladestation 2 wird ab einer nullten Ortsposition x0 die elektrische Verbindung über Kontakte 3,4 zwischen dem Energiespeichers 5 und der Ladestation 2 hergestellt. Die resultierende Spannungsdifferenz zwischen dem Energiespeicher 5 und der Energiequelle 6 der Ladestation 2 fällt über die elektrische Schaltung 9, insbesondere über die Strombegrenzungskomponente 13 ab. Nach Schließen des elektrischen Kontaktes wird durch den Stromregler des Hoch-/Tiefsetzstellers 20 des Energiespeichers 5 die Spannung am Energiespeicher abgesenkt bis ab einer folgenden ersten Ortsposition x1 die Spannung des Hoch-/Tiefsetzstellers 20 zum Energiespeichers 5 hin niedriger wird als die Spannung der Energiequelle 6. Ab diesem Zeitpunkt kann der vom Stromregler eingestellte Ladestrom von der Ladestation zum Energiespeicher fließen. Der Stromregler kann auch in der Ladestation, insbesondere in dem weiteren Strombegrenzungsmittel 14 integriert sein. Vor dem Erreichen der nullten Ortsposition x0 kann die Spannung am Energiespeicher auch gleich oder niedriger als die Spannung der Ladestation sein. Dann ist jedoch eine Erhöhung auf den Betriebswert vor dem Erreichen der nullten Ortsposition notwendig.

Die elektrische Verbindung zwischen Energiespeicher und Ladestation kann in einer weiteren Ausführungsform zwischen der nullten Ortsposition x0 und der ersten Ortsposition x1 hergestellt werden. In dem Bereich vor der nullten Ortsposition x0 weist die Spannung U1 am Energiespeicher einen Spannungswert auf, der höher als der Wert der Spannung der Energiequelle 6 oder zumindest annähernd gleich der Spannung der Energiequelle 6 ist. Durch die annähernd gleich hohe Spannung oder die höhere Spannung auf der einen Seite und das Vorsehen des Strombegrenzungsmittels 13 erfolgt an der nullten Ortsposition x0 bei der Herstellung der elektrischen Verbindung zwischen dem Fahrzeug und Ladestation kein Stromfluss. Nach der Herstellung der elektrischen Verbindung zwischen dem Fahrzeug und der Ladestation wird durch den Stromregler der elektrischen Schaltung 9 die Spannung des Energiespeichers 5 auf einen Ladewert abgesenkt. Damit kann der Energiespeicher von der Energiequelle 6 aufgeladen werden. Anschließend kann das Fahrzeug 1 beispielsweise an der dritten Ortsposition x3 zum Stillstand kommen und der Energiespeicher 5 vollständig aufgeladen werden. Abhängig von der gewählten Ausführungsform kann das Fahrzeug 1 auch ohne Stillstand an der Ladestation 2 vorbei fahren.

Fährt nun das Fahrzeug 1 von der dritten Ortsposition x3 wieder an, d.h. es beschleunigt, so wird der Energiespeicher 5 weiterhin von der Energiequelle 6 mit Strom versorgt, da beide weiterhin elektrisch miteinander verbunden sind. Zudem kann die elektrische Energie der Energiequelle 6 verwendet werden, um den Antrieb 7 bei der Beschleunigung des Fahrzeuges 1 mit Energie zu versorgen. Bei einer vierten Ortsposition x4 wird mit Hilfe der elektrischen Schaltung 9 der Strom über die Kontakte 3 durch den Stromregler des Energiespeichers zu Null geregelt. Bei der sechsten Ortsposition x6 verlässt das Fahrzeug 1 die Ladestation 2 und die elektrischen Kontakte werden hier getrennt. Abhängig von der gewählten Ausführungsform erfolgt eine Trennung des ersten und des zweiten Kontaktes 3,4 zwischen der fünften und der sechsten Ortsposition x5, x6. In diesem Bereich ist der Stromfluss zwischen dem Fahrzeug und der Energiequelle 6 annähernd gleich Null. Aufgrund des Strombegrenzungsmittels 13 erfolgt beim Überschreiten der Spannung am Energiespeicher 5 über die Spannung der Energiequelle 6 trotzdem kein Stromfluss zurück vom Energiespeicher 5 in Richtung der Energiequelle 6. Somit können die beiden Kontakte 3,4 voneinander ohne Stromfluss getrennt werden, insbesondere wird kein Lichtbogen erzeugt. Mindestens wird die Ausbildung eines Lichtbogens begrenzt und reduziert.

FIG 3 zeigt ein weiteres Diagramm, in dem der Strom I von der Energiequelle 6 zum Fahrzeug 2 über die Ortsposition des Fahrzeuges 1 aufgetragen sind. Das Fahrzeug bewegt sich von links nach rechts. Beim Anfahren an die Ladestation 2 besteht kein elektrischer Kontakt zwischen der Ladestation 2 und dem Fahrzeug 3, so dass kein Strom fließt. Beim Einfahren in die Ladestation 2 wird ab einer nullten Ortsposition x0 die elektrische Verbindung über die Kontakte 3,4 zwischen dem Energiespeichers 5 und der Ladestation 2 hergestellt. Durch den Stromregler 20 der Energiequelle 6 und/oder durch den Stromregler 20 des Energiespeichers 5 wird der fließende Strom in einer Anfangszeit nach dem Herstellen des elektrischen Kontaktes begrenzt, vorzugsweise auf den Wert Null eingestellt. Nach einer Anfangszeit, d.h. da sich das Fahrzeug bewegt nach einem Wegstück im Diagramm, wird der Stromfluss durch den Stromregler 20 von der elektrischen Schaltung 20 und/oder von der weiteren elektrischen Schaltung 14 langsam bis auf einen Nennwert, d.h. eine vorgegebene Stromstärke erhöht, so dass Strom von der Ladestation 2 zum Fahrzeug 1, insbesondere zum Energiespeicher 5 und/oder zum Antrieb 7 fließt.

Damit kann der Energiespeicher 5 von der Energiequelle 6 aufgeladen werden. Anschließend kann das Fahrzeug 1 beispielsweise an der dritten Ortsposition x3 zum Stillstand kommen und der Energiespeicher 5 vollständig aufgeladen werden. Abhängig von der gewählten Ausführungsform kann das Fahrzeug 1 auch ohne Stillstand an der Ladestation 2 vorbei fahren.

Fährt nun das Fahrzeug 1 von der dritten Ortsposition x3 wieder an, d.h. es beschleunigt, so wird der Energiespeicher 5 weiterhin von der Energiequelle 6 mit Strom versorgt, da beide weiterhin elektrisch miteinander verbunden sind. Zudem kann die elektrische Energie der Energiequelle 6 verwendet werden, um den Antrieb 7 direkt über die Schaltung 9 ohne Zwischenspeicherung im Energiespeicher 5 mit Energie zu versorgen. Somit kann der Antrieb 7 während des elektrischen Kontaktes mit der Ladestation 2 mit Strom versorgt werden. Insbesondere kann der Antrieb 7 beim Anfahren des Fahrzeuges und während der Beschleunigung des Fahrzeuges 1 mit Energie direkt von der Ladestation 2 versorgt werden. Gleichzeitig kann über die elektrische Schaltung 9, den Stromregler 20 und den Schalter 40 auch der Energiespeicher 5 aufgeladen werden. Beim Anfahren und Beschleunigen des Fahrzeuges 1 kann aber auch nur der Antrieb 7 mit Energie versorgt werden, damit ausreichend Energie zum Antrieb des Antriebes 7 vorhanden ist.

Bei einer vierten Ortsposition x4 wird mit Hilfe des Stromreglers 20 oder der Stromregler 20 der Strom über die Kontakte 3,4 zu Null geregelt. Bei der sechsten Ortsposition x6 verlässt das Fahrzeug 1 die Ladestation 2 und die elektrischen Kontakte 3, 4 werden hier getrennt.

Abhängig von der gewählten Ausführungsform erfolgt eine Trennung des ersten und des zweiten Kontaktes 3,4 zwischen der fünften und der sechsten Ortsposition x5, x6. In diesem Bereich ist der Stromfluss zwischen dem Fahrzeug und der Energiequelle 6 annähernd oder gleich Null.

Aufgrund des Strombegrenzungsmittels 13 wird sichergestellt, dass kein Stromfluss vom Energiespeicher 5 zurück in Richtung Energiequelle 6 fließt. Somit können die beiden Kontakte 3,4 voneinander ohne Stromfluss getrennt werden, insbesondere wird kein Lichtbogen erzeugt. Mindestens wird die Ausbildung eines Lichtbogens begrenzt und reduziert.

Abhängig von der gewählten Ausführungsform kann die Spannungsversorgung anstelle einer Oberleitung und einer Schiene auch über zwei Schienen oder zwei Oberleitungen auf der Seite der Ladestation ausgeführt sein. Das Fahrzeug weist dann entsprechend ausgebildete Kontakte auf, die zur Kontaktierung der Oberleitungen oder Schienen vorgesehen sind, und die über die elektrische Schaltung 9 mit den zwei elektrischen Polen des Energiespeichers 5 verbunden sind. Die Stromschienen sind beispielsweise seitlich oder unterhalb des Fahrzeuges angeordnet.

Anstelle der anhand von FIG 2 und FIG 3 erläuterten Steuerung der Spannung bzw. des Stromes des Energiespeichers 5 abhängig von der Ortsposition kann auch die Höhe der Spannung bzw. die Höhe des Stromes des Energiespeichers 5 abhängig von der Zeit, insbesondere abhängig von der Herstellung und/oder Trennung des elektrischen Kontakts zwischen Fahrzeug und Ladestation gesteuert werden. Zur Einstellung der Spannung und/oder der Ströme werden die erste und/oder die zweite elektrische Schaltung 9, 14, insbesondere die Stromregler 20 verwendet.

Abhängig von der gewählten Ausführungsform kann auch die Spannung und/oder der Strom der Energiequelle 6 vor dem Herstellen einer elektrisch leitenden Verbindung oder vor dem Auftrennen einer elektrisch leitenden Verbindung zwischen dem Fahrzeug und der Energiequelle in der Weise angepasst werden, dass beim Herstellen oder beim Auftrennen der elektrisch leitenden Verbindung zwischen dem Fahrzeug und der Ladestation wenig oder kein Stromfluss vorliegt. Während des Aufladens des Energiespeichers 5 und/oder der Versorgung des Antriebes 7 wird der Stromregler des Fahrzeuges 1 so gesteuert, dass der Strom von der Energiequelle 6 in Richtung des Energiespeichers 5 und/oder des Antriebes 7 fließt.

## Patentansprüche

1. Elektrische Schaltung (9, 14, 20) für einen Energiespeicher (5) eines Fahrzeuges (1) oder eine elektrische Energiequelle (6) einer Ladestation (2), mit einem elektrischen Kontakt (3; 4) zum Herstellen einer elektrischen Verbindung zwischen dem Energiespeicher (5) und der externen Energiequelle (6), um den Energiespeicher (5) mit Energie zu versorgen, wobei die elektrische Schaltung (9, 14, 20) in der Weise ausgebildet ist, um vor dem Aufbau der elektrischen Verbindung oder vor dem Unterbrechen der elektrischen Verbindung zwischen dem Fahrzeug (1) und der Ladestation (2) die elektrische Spannung und/oder den Strom zwischen dem Energiespeicher (5) und der Ladestation (2) in der Weise anzupassen, dass beim Aufbau der elektrischen Verbindung oder beim Unterbrechen der elektrischen Verbindung über den elektrischen Kontakt (3,4) wenig oder kein Strom fließt, wobei die elektrische Schaltung (9, 20) in der Weise ausgebildet ist, um vor dem Aufbau der elektrischen Verbindung zwischen dem Fahrzeug (1) und der Ladestation (2) die elektrische Spannung auf der Seite des Energiespeichers (5) über den Wert der Spannung auf der Seite der Energiequelle (6) zu heben, oder um vor dem Aufbau der elektrischen Verbindung zwischen dem Fahrzeug und der Ladestation die elektrische Spannung auf der Seite der Energiequelle (6) unter den Wert der Spannung auf der Seite des Energiespeichers (6) zu senken, und wobei eine Diode als Strombegrenzungsmittel (13, 14) vorgesehen ist, die einen Stromfluss nach dem Aufbau der elektrischen Verbindung vom Energiespeicher (5) zur Energiequelle (6) wenigstens begrenzt.

2. Schaltung nach Anspruch 1,
wobei die elektrische Schaltung (9, 20) in der Weise ausgebildet ist, um vor dem Unterbrechen der elektrischen Verbindung zwischen dem Fahrzeug und der Ladestation (2) den elektrischen Strom zwischen dem Fahrzeug und der Ladestation (2) zu senken, wobei ein Strombegrenzungsmittel (13) vorgesehen ist, das einen Stromrückfluss vom Energiespeicher (5) zurück zur Energiequelle (6) wenigstens begrenzt.

3. Schaltung nach einem der Ansprüche 1 oder 2,
wobei die elektrische Schaltung (14, 20) in der Weise ausgebildet ist, um vor dem Unterbrechen der elektrischen Verbindung zwischen dem Fahrzeug (1) und der Ladestation (2) den elektrischen Strom zwischen dem Fahrzeug (1) und der Energiequelle (6) zu senken, wobei ein Strombegrenzungsmittel (14) vorgesehen ist, das einen Stromrückfluss vom Energiespeicher (5) zurück zur Energiequelle (6) wenigstens begrenzt.

4. Schaltung nach einem der Ansprüche 1 bis 3,
**dadurch gekennzeichnet, dass** ein Erkennungsmittel (10,11,12) vorgesehen ist, das einen bevorstehenden Aufbau und/oder eine bevorstehende Trennung der elektrischen Verbindung des Fahrzeuges (1) mit/von der Ladestation (2), insbesondere des ersten und des zweiten Kontaktes (3,4) erkennt, und ein Erkennungssignal an die elektrische Schaltung (9, 14) weiter leitet.

5. Schaltung nach Anspruch 4,
**dadurch gekennzeichnet, dass** das Erkennungsmittel in Form eines Positionserkennungsmittels (10) ausgebildet ist.

6. Schaltung nach einem der Ansprüche 1 bis 5,
**dadurch gekennzeichnet, dass** die elektrische Schaltung (9, 14) einen Hoch-/Tiefsetzsteller (20) aufweist, um die Spannung zu verändern.

7. Verfahren zum Aufladen eines Energiespeichers eines Fahrzeuges, insbesondere eines Schienenfahrzeuges, wobei ein elektrischer erster Kontakt des Energiespeichers mit einem elektrischen zweiten Kontakt einer Energiequelle, insbesondere einer Ladestation, elektrisch verbunden wird, wobei vor dem Aufbau und/oder vor dem Trennen der elektrischen Verbindung der elektrischen Kontakte ein elektrischer Spannungsunterschied zwischen dem Energiespeicher und der Energiequelle oder ein Stromfluss zwischen dem Energiespeicher und der Energiequelle in der Weise beeinflusst wird, um einem Aufbau eines Lichtbogens entgegen zu wirken, wobei vor dem Aufbau und/oder vor dem Trennen der elektrischen Verbindung der elektrischen Kontakte zur Reduzierung des Stromflusses die Spannungen auf der Seite des Energiespeichers und/oder auf der Seite der Energiequelle in der Weise beeinflusst werden, dass die Spannung auf der Seite des Energiespeichers höher ist als die Spannung der Energiequelle, wobei eine Diode als Strombegrenzungsmittel vorgesehen ist, die einen Stromfluss vom Energiespeicher in Richtung Energiequelle wenigstens reduziert.

8. Verfahren nach Anspruch 7,
wobei erst das Fahrzeug beschleunigt wird, anschließend die Spannungsdifferenz oder der Stromfluss zwischen der Energiequelle und dem Energiespeicher beeinflusst wird, und dann die elektrischen Kontakte der Energiequelle und des Energiespeichers getrennt werden.

## Claims

1. Electrical circuit (9, 14, 20) for an energy store (5) of a vehicle (1) or an electrical energy source (6) of a charging station (2), having an electrical contact (3; 4) for producing an electrical connection between the energy store (5) and the external energy source (6), in order to supply the energy store (5) with energy, wherein the electrical circuit (9, 14, 20) is embodied in such a way that, before the electrical connection between the vehicle (1) and the charging station (2) is set up or disconnected, the electrical voltage and/or the current between the energy store (5) and the charging station (2) is adapted in such a way that when the electrical connection is set up or disconnected little current or no current flows across the electrical contact (3, 4), wherein the electrical circuit (9, 20) is embodied in such a way that, before the electrical connection between the vehicle (1) and the charging station (2) is set up, it raises the electrical voltage on the side of the energy store (5) above the voltage on the side of the energy source (6), or, before the electrical connection between the vehicle and the charging station is set up, it lowers the electrical voltage on the side of the energy source (6) below the voltage on the side of the energy store (5), and wherein a diode is provided as a current limiting means (13, 14) which at least limits a flow of current after the electrical connection from the energy store (5) to the energy source (6) is set up.

2. Circuit according to Claim 1,
wherein the electrical circuit (9, 20) is embodied in such a way that, before the electrical connection between the vehicle and the charging station (2) is disconnected, it lowers the electrical current between the vehicle and the charging station (2), wherein a current limiting means (13) is provided which at least limits a return flow of current from the energy store (5) back to the energy source (6).

3. Circuit according to one of Claims 1 or 2,
wherein the electrical circuit (14, 20) is embodied in such a way that, before the electrical connection between the vehicle (1) and the charging station (2) is disconnected, it lowers the electrical current between the vehicle (1) and the energy source (6), wherein a current limiting means (14) is provided which at least limits a return flow of current from the energy store (5) back to the energy source (6).

4. Circuit according to one of Claims 1 to 3,
**characterized in that** a detection means (10, 11, 12) is provided which detects imminent setting up and/or imminent disconnection of the electrical connection of the vehicle (1) to/from the charging station (2), in particular of the first and second contacts (3, 4), and passes on a detection signal to the electrical circuit (9, 14).

5. Circuit according to Claim 4,
**characterized in that** the detection means is embodied in the form of a position detection means (10).

6. Circuit according to one of Claims 1 to 5,
**characterized in that** the electrical circuit (9, 14) has a step-up/step-down converter (20) for changing the voltage.

7. Method for charging an energy store of a vehicle, in particular of a rail vehicle, wherein an electrical first contact of the energy store is electrically connected to an electrical second contact of an energy source, in particular of a charging station, wherein, before the setting up and/or the disconnection of the electrical connection of the electrical contacts, a difference in electrical voltage between the energy store and the energy source or a flow of current between the energy store and the energy source is influenced in such a way that it counteracts the production of an electric arc, wherein, before the setting up and/or the disconnection of the electrical connection of the electrical contacts, in order to reduce the flow of current, the voltages on the side of the energy store and/or the side of the energy source are influenced in such a way that the voltage on the side of the energy store is higher than the voltage of the energy source, wherein a diode is provided as a current limiting means which at least reduces a flow of current, from the energy store in the direction of the energy source.

8. Method according to Claim 7,
wherein the vehicle is firstly accelerated, the difference in voltage or the flow of current between the energy source and the energy store is subsequently influenced, and then the electrical contacts of the energy source and of the energy store are disconnected.

## Revendications

1. Circuit ( 9, 14, 20 ) électrique pour un accumulateur ( 5 ) d'énergie d'un véhicule ( 1 ) ou pour une source ( 6 ) d'énergie électrique d'un poste ( 2 ) de charge, comprenant un contact ( 3, 4 ) électrique pour ménager une liaison électrique entre l'accumulateur ( 5 ) d'énergie et la source ( 6 ) extérieure d'énergie, afin d'alimenter l'accumulateur ( 5 ) d'énergie en énergie, le circuit ( 9, 14, 20 ) électrique étant constitué pour, avant l'établissement de la liaison électrique ou avant l'interruption de la liaison électrique entre le véhicule ( 1 ) et le poste ( 2 ) de charge, adapter la tension électrique et/ou le courant entre l'accumulateur ( 5 ) d'énergie et le poste ( 2 ) de charge, de manière à ce que, lors de l'établissement de la liaison électrique ou lors de l'interruption de la liaison électrique, il passe peu ou pas de courant par le contact ( 3, 4 ) électrique, le circuit ( 9, 20 ) électrique étant constitué de manière à ce que, avant l'établissement de la liaison électrique entre le véhicule ( 1 ) et le poste ( 2 ) de charge, la tension électrique soit élevée du côté de l'accumulateur ( 5 ) d'énergie au-dessus de la valeur de la tension du côté de la source ( 6 ) d'énergie, ou de manière à ce que, avant l'établissement de la liaison électrique entre le véhicule et le poste de charge, la tension électrique soit abaissée du côté de la source ( 6 ) d'énergie en dessous de la valeur de la tension du côté de l'accumulateur ( 5 ) d'énergie et dans lequel il est prévu, comme moyen ( 13, 14 ) de limitation du courant, une diode, qui limite, après l'établissement de la liaison électrique, au moins un flux de courant allant de l'accumulateur ( 5 ) d'énergie à la source ( 6 ) d'énergie.

2. Circuit suivant la revendication 1,
dans lequel le circuit ( 9, 20 ) électrique est constitué de manière à ce que, avant l'interruption de la liaison électrique entre le véhicule et le poste ( 2 ) de charge, le courant électrique entre le véhicule et le poste ( 2 ) de charge soit abaissé, dans lequel il est prévu un moyen ( 13 ) de limitation du courant, qui limite au moins un flux de retour du courant de l'accumulateur ( 5 ) d'énergie à la source ( 6 ) d'énergie.

3. Circuit suivant l'une des revendications 1 ou 2,
dans lequel le circuit ( 14, 20 ) électrique est constitué de manière à ce que, avant l'interruption de la liaison électrique entre le véhicule ( 1 ) et le poste ( 2 ) de charge, le courant électrique entre le véhicule ( 1 ) et la source ( 6 ) d'énergie soit abaissé, dans lequel il est prévu un moyen ( 14 ) de limitation du courant, qui limite au moins un flux de retour du courant de l'accumulateur ( 5 ) d'énergie à la source ( 6 ) d'énergie.

4. Circuit suivant l'une des revendications 1 à 3,
**caractérisé en ce qu'**il est prévu un moyen ( 10, 11, 12 ) de détection, qui détecte un établissement imminent de la liaison électrique du véhicule ( 1 ) au poste ( 2 ) de charge et/ou une séparation imminente de la liaison électrique du véhicule ( 1 ) du poste ( 2 ) de charge, notamment du premier et du deuxième contacts ( 3, 4 ), et qui achemine un signal de détection au circuit ( 9, 14 ) électrique.

5. Circuit suivant la revendication 4,
**caractérisé en ce que** le moyen de détection est constitué sous la forme d'un moyen ( 10 ) de détection de position.

6. Circuit suivant l'une des revendications 1 à 5 **caractérisé en ce que** le circuit ( 9, 14 ) électrique a un convertisseur ( 20 ) élévateur/abaisseur de tension pour modifier la tension.

7. Procédé de charge d'un accumulateur d'énergie d'un véhicule, notamment d'un véhicule ferroviaire, dans lequel on relie électriquement un premier contact électrique d'accumulateur d'énergie à un deuxième contact électrique d'une source d'énergie, notamment d'un poste de charge, dans lequel, avant l'établissement et/ou avant la séparation de la liaison électrique des contacts électriques, on influe sur une différence de tension électrique entre l'accumulateur d'énergie et la source d'énergie ou sur un flux de courant de l'accumulateur d'énergie et la source d'énergie, de manière à s'opposer à l'établissement d'un arc électrique, dans lequel, avant l'établissement et/ou avant la séparation de la liaison électrique des contacts électriques, on influe pour réduire le flux de courant sur la tension du côté de l'accumulateur d'énergie et/ou du côté de la source d'énergie, de manière à ce que la tension du côté de l'accumulateur d'énergie soit plus haute que la tension de la source d'énergie, dans lequel on prévoit, comme moyen de limitation du courant, une diode, qui réduit au moins un flux de courant allant de l'accumulateur d'énergie en direction de la source d'énergie.

8. Procédé suivant la revendication 7,
dans lequel on accélère d'abord le véhicule, on influe ensuite sur la différence de tension ou le flux de courant entre la source d'énergie et l'accumulateur d'énergie et en ce qu'on sépare les contacts électriques de la source d'énergie et de l'accumulateur d'énergie.
